# EUROPÄISCHE PATENTSCHRIFT

(11) **EP 0 976 963 B1**
(45) Veröffentlichungstag und Bekanntmachung des Hinweises auf die Patenterteilung: **31.07.2002**
(21) Anmeldenummer: 99110441.5
(22) Anmeldetag: 29.05.1999
(51) Int. Cl.: F16L 43/00, F16J 15/02, F16L 25/00, F16L 27/08

(54) **Verbindungsvorrichtung**
Connecting device
Dispositif de raccordement

(30) Priorität: 31.07.1998 AT 132198
(43) Veröffentlichungstag der Anmeldung: 02.02.2000
(73) Patentinhaber: Jenbacher Aktiengesellschaft, 6200 Jenbach/Tirol (AT)
(72) Erfinder: Kathrein, Gerhard, 6522 Prutz (AT)
(74) Vertreter: Torggler, Paul Norbert, Dr.

(56) Entgegenhaltungen:
- DE-A- 2 630 965
- DE-C- 805 469
- FR-A- 1 185 193

## Beschreibung

Die vorliegende Erfindung betrifft eine Verbindungsvorrichtung zum Verbinden von zwei Rohrstücken, insbesondere von Rohrstücken einer Verbrennungskraftmaschine, deren Anschlußflächen in unterschiedlichen, einen Winkel einschließenden Ebene liegen, wobei die Verbindungsvorrichtung ein in einer Seitenansicht keilförmiges, rohrartiges Verbindungselement mit an die Anschlußflächen der Rohrstücke angepaßten Anschlußflächen umfaßt, dessen Keilwinkel im wesentlichen mit dem von den Ebenen eingeschlossenen Winkel übereinstimmt, sowie zwei verformbare, ringförmige Dichtelemente zum Abdichten der beiden Anschlußbereiche zwischen den Rohrstücken und dem Verbindungselement.

Insbesondere im Motorenbau stellt sich häufig das Problem, daß eine dichte Verbindung zwischen den Anschlußflächen von Rohrstücken geschaffen werden muß, wobei die Anschlußflächen in unterschiedlichen, winkelig zueinander stehenden Ebenen liegen. Hierzu ist es beispielsweise bekannt, Schlauchstücke oder Schellen zu verwenden. Diese Konstruktionen haben sich jedoch aufgrund mangelnder Stabilität als nachteilig erwiesen. Weiters ist es bekannt, zwischen den Rohrstücken ein Verbindungselement anzuordnen und dieses mittels Flanschverbindungen mit den Rohrstükken zu verschrauben. Diese Variante ist sehr aufwendig, da einerseits bei der Fertigung des Verbindungselementes sehr enge Toleranzen eingehalten werden müssen und andererseits bei der Montage oder bei Servicearbeiten eine Vielzahl von Schraubverbindungen angezogen bzw. gelöst werden muß.

Aufgabe der Erfindung ist es daher, eine Verbindungsvorrichtung zu schaffen, deren Herstellung und Montage einfach ist und die ausreichende Stabilität gewährleistet.

Dies wird erfindungsgemäß dadurch gelöst, daß weiters Mittel zum Einpressen des Verbindungselementes zwischen die Rohrstücke in Richtung seiner Keilspitze vorgesehen sind.

Im Gegensatz zur Flanschverbindung, bei der die endgültige Lage des Verbindungselementes durch die Bohrlöcher in den Flanschen exakt bestimmt ist, erlaubt das Einpressen des keilförmigen Verbindungselementes in Richtung seiner Keilspitze einen Ausgleich von Ungenauigkeiten in bezug auf die Abmessungen des Verbindungselementes sowie die Lage der zu verbindenden Rohrstücke zueinander.

Ist weiters vorgesehen, daß die Anschlußflächen des Verbindungselementes im eingepreßten Zustand des Verbindungselementes von den Anschlußflächen der Rohrstücke geringfügig beabstandet sind, wobei die Fugen zwischen den Anschlußflächen durch die Dichtelemente abgedichtet sind, so erlaubt die Konstruktion sogar eine geringfügige Relativbewegung der einzelnen Bauteile zueinander.

Besonders bewährt hat sich jene Ausführungsform, bei der die Anpreßkraft mittels am Verbindungselement angreifender Schrauben auf das Verbindungselement aufgebracht wird.

Das Verbindungselement ist vorzugsweise so ausgestaltet, daß es außenseitig mindestens eine Haltevorrichtung für die Mittel zum Einpressen des Verbindungselementes in Richtung seiner Keilspitze aufweist.

Im Sinne einer symmetrischen Krafteinleitung ist es dabei günstig, wenn das Verbindungselement zwei Vorsprünge mit Bohrungen in Richtung der Winkelsymmetrale der Anschlußflächen des Verbindungselementes aufweist.

Weitere Merkmale und Einzelheiten der vorliegenden Erfindung ergeben sich aus der nachfolgenden Figurenbeschreibung. Dabei zeigt:
Fig. 1 eine Ansicht eines erfindungsgemäßen Verbindungselementes,
Fig. 2 einen Querschnitt durch eine erfindungsgemäße Verbindungsvorrichtung,
Fig. 3 eine Vergrößerung des in Fig. 2 eingezeichneten Bereiches A und
Fig. 4 eine teilweise geschnittene Ansicht eines mit nur einem Rohrstück verbundenen Verbindungselementes.

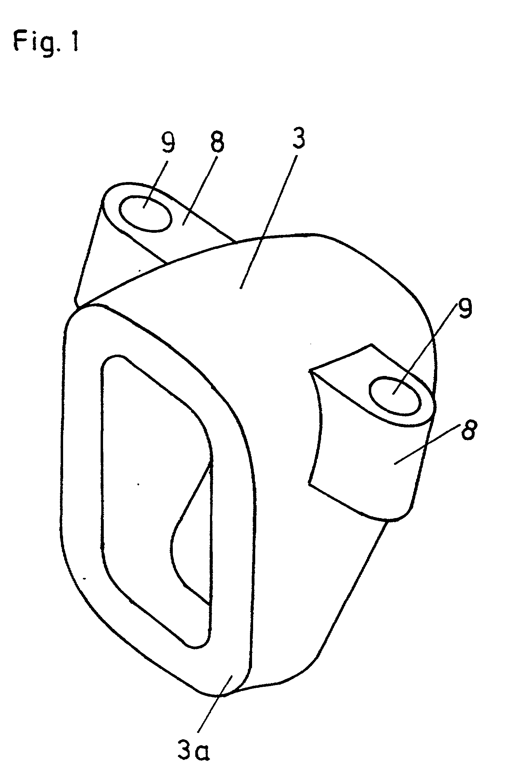

Wie aus Fig. 1 ersichtlich, weist das erfindungsgemäße Verbindungselement 3 die Gestalt eines keilförmig zugeschnittenen Rohres auf. Das Verbindungselement 3 ist symmetrisch ausgestaltet und weist in der Ebene der Winkelsymmetrale der beiden Anschlußflächen 3a zwei Vorsprünge 8 auf. Diese Vorsprünge 8 sind mit je einer Bohrung 9 versehen, deren Mittelachse ebenfalls in der Ebene der Winkelsymmetrale liegt.

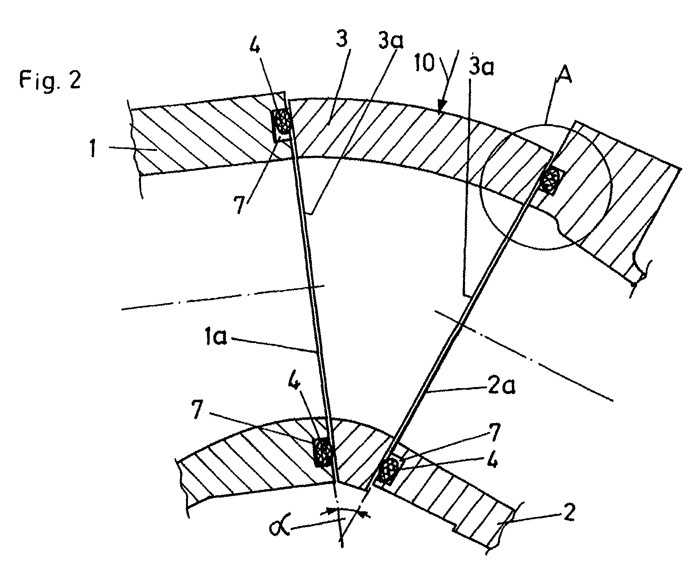

Gemäß Fig. 2 wird das Verbindungselement 3 in Richtung seiner Keilspitze (Pfeil 10) eingeschoben und zwischen die Rohrstücke 1 und 2 eingepreßt. Dabei verformen sich die Dichtelemente 4. Es handelt sich bei den Dichtelementen 4 um O-Ringe oder entsprechende Formdichtungen, die in Ausnehmungen 7 in den Anschlußflächen 1a und 2a der Rohrstücke 1 und 2 angeordnet sind.

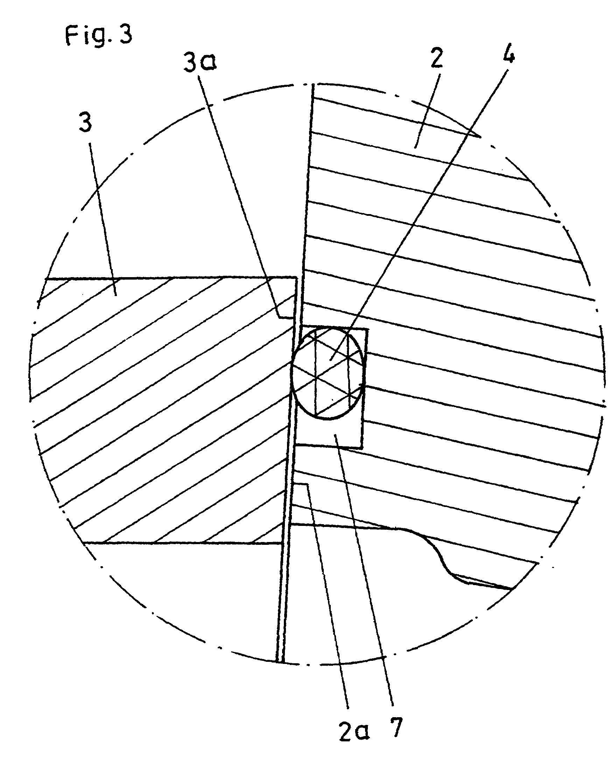

Wie dem Detail der Fig. 3 entnehmbar, verbleibt selbst im Endzustand zwischen der Anschlußfläche 3a des Verbindungselementes 3 und der Anschlußfläche 2a des Rohres 2 ein geringfügiger Abstand, wobei die Fuge zwischen den Anschlußflächen 2a und 3a durch das Dichtelement 4 abgedichtet sind. (Gleiches gilt für den Anschlußbereich zwischen dem Verbindungselement 3 und dem Rohrstück 1). Durch die Vermeidung direkten metallischen Kontaktes wird eine geringfügige Relativbewegung der Bauteile zueinander, wie sie beispielsweise aufgrund von Wärmeausdehnung auftritt, ermöglicht.

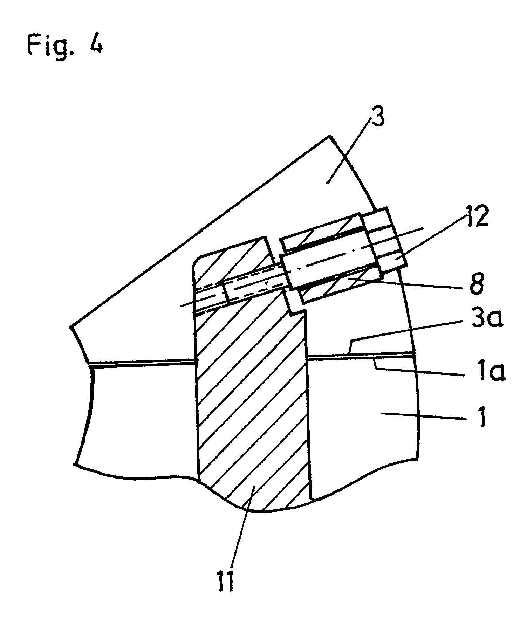

Die notwendige Einpreßkraft wird auf das Verbindungselement 3 mittels Schrauben 12 aufgebracht, die durch die Bohrungen 9 in den Vorsprüngen 8 verlaufen und deren Gewindeabschnitt beispielsweise in eine Gewindebohrung eingeschraubt wird, die sich an einer fest mit dem Rohrstück 1 verbundenen Verlängerung 11 befindet (Fig. 4). Vorstellbar ist auch, daß das Verbindungselement 3 gegenüber einem Rahmen verspannt wird, der die Rohrstücke 1 und 2 trägt.

## Patentansprüche

1. Verbindungsvorrichtung zum Verbinden von zwei Rohrstücken, insbesondere von Rohrstücken einer Verbrennungskraftmaschine, deren Anschlußflächen in unterschiedlichen, einen Winkel einschließenden Ebene liegen, wobei die Verbindungsvorrichtung ein in einer Seitenansicht keilförmiges, rohrartiges Verbindungselement (3) mit an die Anschlußflächen (1a, 2a) der Rohrstücke (1, 2) angepaßten Anschlußflächen (3a) umfaßt, dessen Keilwinkel (α) im wesentlichen mit dem von den Ebenen eingeschlossenen Winkel übereinstimmt, sowie zwei verformbare, ringförmige Dichtelemente (4) zum Abdichten der beiden Anschlußbereiche zwischen den Rohrstücken (1, 2) und dem Verbindungselement (3), **dadurch gekennzeichnet, daß** weiters Mittel zum Einpressen des Verbindungselementes (3) zwischen die Rohrstücke (1, 2) in Richtung seiner Keilspitze vorgesehen sind.

2. Verbindungsvorrichtung nach Anspruch 1, **dadurch gekennzeichnet, daß** die Dichtelemente (4) im eingepreßten Zustand des Verbindungselementes (3) zusammengedrückt sind.

3. Verbindungsvorrichtung nach Anspruch 1 oder 2, **dadurch gekennzeichnet, daß** die Anschlußflächen (3a) des Verbindungselementes (3) im eingepreßten Zustand des Verbindungselementes (3) von den Anschlußflächen (1a, 2a) der Rohrstücke (1, 2) geringfügig beabstandet sind, wobei die Fugen zwischen den Anschlußflächen (1a, 2a, 3a) durch die Dichtelemente (4) abgedichtet sind.

4. Verbindungsvorrichtung nach einem der Ansprüche 1 bis 3, **dadurch gekennzeichnet, daß** die Anpreßkraft mittels am Verbindungselement (3) angreifender Schrauben (12) auf das Verbindungselement (3) aufgebracht wird.

5. Verbindungsvorrichtung nach einem der Ansprüche 1 bis 4, **dadurch gekennzeichnet, daß** die Anschlußflächen (1a, 2a) der Rohrstücke (1, 2) Ausnehmungen (7) für die Dichtringe (4) aufweisen.

6. Verbindungselement einer Verbindungsvorrichtung nach einem der Ansprüche 1 bis 5, **dadurch gekennzeichnet, daß** das Verbindungselement (3) außenseitig mindestens eine Haltevorrichtung für die Mittel zum Einpressen des Verbindungselementes (3) in Richtung seiner Keilspitze aufweist.

7. Verbindungselement nach Anspruch 6, **dadurch gekennzeichnet, daß** das Verbindungselement (3) zwei Vorsprünge (8) mit Bohrungen (9) in Richtung der Winkelsymmetrale der Anschlußflächen (3a) des Verbindungselementes (3) aufweist.

## Claims

1. A connecting arrangement for connecting two pipe portions, in particular pipe portions of an internal combustion engine, the connecting faces of which are in different planes which include an angle, wherein the connecting arrangement includes a tubular connecting element (3) which is wedge-shaped in side view and which has connecting faces (3a) adapted to the connecting faces (1a, 2a) of the pipe portions (1, 2), the wedge angle (α) of the connecting faces (3a) being substantially identical to the angle included by the planes, and two deformable annular sealing elements (4) for sealing off the two connecting regions between the pipe portions (1, 2) and the connecting element (3), **characterised in that** there are further provided means for pressing the connecting element (3) in between the pipe portions (1, 2) in the direction of its wedge tip.

2. A connecting arrangement according to claim 1 **characterised in that** the sealing elements (4) are compressed in the pressed-in condition of the sealing element (3).

3. A connecting arrangement according to claim 1 or claim 2 **characterised in that** in the pressed-in condition of the connecting element (3) the connecting faces (3a) of the connecting element (3) are slightly spaced from the connecting faces (1a, 2a) of the pipe portions (1, 2), wherein the gaps between the connecting faces (1a, 2a, 3a) are sealed off by the sealing elements (4).

4. A connecting arrangement according to one of claims 1 to 3 **characterised in that** the contact pressure force is applied to the connecting element (3) by means of screws (12) engaging the connecting element (3).

5. A connecting arrangement according to one of claims 1 to 4 **characterised in that** the connecting faces (1a, 2a) of the pipe portions (1, 2) have recesses (7) for the sealing rings (4).

6. A connecting element of a connecting arrangement according to one of claims 1 to 5 **characterised in that** the connecting element (3) has on the outside at least one holding device for the means for pressing in the connecting element (3) in the direction of its wedge tip.

7. A connecting element according to claim 6 **characterised in that** the connecting element (3) has two projections (8) with bores (9) in the direction of the line of symmetry of the angle of the connecting faces (3a) of the connecting element (3).

## Revendications

1. Dispositif de raccordement pour raccorder deux pièces de tuyauterie, notamment des pièces de tuyauterie d'une machine à combustion interne, dont les faces de raccordement sont situées dans des plans différents formant un angle, le dispositif de raccordement comprenant un élément de raccordement (3) tubulaire, en forme de coin dans une vue de côté, muni de faces de raccordement (3a) adaptées aux faces de raccordement (1a, 2a) des pièces de tuyauterie (1, 2), dont l'angle de coin α concorde sensiblement avec celui qui forme les plans, ainsi que deux éléments d'étanchéité (4) en forme d'anneau, déformables, destinés à étancher les deux zones de raccordement entre les pièces de tuyauterie (1, 2) et l'élément de raccordement (3), **caractérisé en ce que** des moyens supplémentaires sont prévus pour insérer sous pression l'élément de raccordement (3) entre les pièces de tuyauterie (1, 2) en direction de sa pointe de coin.

2. Dispositif de raccordement selon la revendication 1, **caractérisé en ce que** les éléments d'étanchéité (4) sont comprimés lorsque l'élément de raccordement (3) est dans l'état inséré sous pression.

3. Dispositif de raccordement selon la revendication 1 ou 2, **caractérisé en ce que** les faces de raccordement (3a) de l'élément de raccordement (3) sont légèrement écartées des faces de raccordement (1a, 2a) des pièces de tuyauterie (1, 2) lorsque l'élément de raccordement (3) est dans l'état inséré sous pression, les jointures entre les faces de raccordement (1a, 2a, 3a) étant étanchées par les éléments d'étanchéité (4).

4. Dispositif de raccordement selon l'une quelconque des revendications 1 à 3, **caractérisé en ce que** la force de pression est appliquée sur l'élément de raccordement (3) au moyen de vis (12) agissant au niveau de l'élément de raccordement (3).

5. Dispositif de raccordement selon l'une quelconque des revendications 1 à 4, **caractérisé en ce que** les faces de raccordement (1a, 2a) des pièces de tuyauterie (1, 2) présentent des évidements (7) pour les bagues d'étanchéité (4).

6. Elément de raccordement d'un dispositif de raccordement selon l'une quelconque des revendications 1 à 5, **caractérisé en ce que** l'élément de raccordement (3) présente, côté extérieur, au moins un dispositif de retenue pour les moyens servant à insérer sous pression l'élément de raccordement (3) en direction de sa pointe de coin.

7. Elément de raccordement selon la revendication 6, **caractérisé en ce que** l'élément de raccordement (3) présente deux parties en saillie (8) dotées d'orifices (9) en direction de la symétrale angulaire des faces de raccordement (3a) de l'élément de raccordement (3).
